Europäisches Patentamt

European Patent Office

Office européen des brevets

(11) Publication number: **0 103 751**
**B1**

(12) **EUROPEAN PATENT SPECIFICATION**

(45) Date of publication of patent specification: **12.07.89**

(51) Int. Cl.⁴: **F 16 H 5/64**

(21) Application number: **83108138.5**

(22) Date of filing: **17.08.83**

(60) Divisional application 87104235 filed on 23.03.87, divisional applications 87117606, 87117578, 87117579 filed on 27.11.87.

(54) **Hydraulic control system for automatic transmission.**

(30) Priority: **20.08.82 JP 143288/82**

(43) Date of publication of application:
**28.03.84 Bulletin 84/13**

(45) Publication of the grant of the patent:
**12.07.89 Bulletin 89/28**

(84) Designated Contracting States:
**DE FR GB**

(56) References cited:
**FR-A-2 118 769**
**GB-A-2 026 631**
**US-A-3 855 880**
**US-A-4 071 126**
**US-A-4 139 015**

**D. HEWITT & R.L. LEONARD: "Design practices - Automatic transmission SAE 1973", chapter 29, pages 324-328; "Design of valve body and governor systems - Part A - Main regulator"**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Ohtsuka, Kunio**
**No. 3046-4, Kokubun**
**Ebina City (JP)**
Inventor: **SUGANO Kazuhiko**
**No. 3-4688-1**
**Sobudai Zama City (JP)**
Inventor: **IDETA Yasufumi**
**No. 1408-22**
**Kozono Ayase City, Kanagawa Prefecture (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Courier Press, Leamington Spa, England.

## Description

### Background of the invention

The present invention relates to a hydraulic control system for an automatic transmission according to the preamble part of claim 1.

Automatic transmissions are known which have a clutch which is engaged when fluid pressure is supplied to a fluid pressure chamber defined within a clutch drum while the clutch drum is rotating in effecting shifting by the clutch. In effecting such shifting, since the clutch drum is rotating, a centrifugal force acts on the fluid within the fluid pressure chamber of the clutch. As a result, the fluid pressure within the fluid pressure chamber increases when the clutch drum is rotating as compared to the static state wherein the clutch drum is stationary. Thus, when the clutch drum is rotating, the capacity of the clutch increases. In the case where the clutch is kept engaged when the transmission is shifted there is no substantial shock produced regardless of how the capacity of the clutch increases because the clutch does not contribute to the shifting operation. In the case the clutch is engaged by supplying fluid pressure to the fluid pressure chamber within the clutch drum which is stationary prior to shifting, the capacity of the clutch determined by the fluid pressure in the static state is maintained because an increase in rotational speed of the clutch drum during shifting is very small and an increase in the capacity of the clutch is negligible. Thus, substantial shocks will not take place.

However, in the case where fluid pressure is supplied to the clutch drum which is rotating at the time of effecting shifting, substantial shocks will take place during shifting because of an increase in the capacity of the clutch resulting from an increase in fluid pressure due to the centrifugal force. To avoid substantial shocks in effecting shifting by the clutch, it is a conceivable measure to decrease the static fluid pressure by a value which is large enough to offset an increase in fluid pressure due to the centrifugal force. But, this measure is not acceptable because the capacity of the clutch in the static state runs short, causing a slip in the clutch. Therefore, it is difficult to avoid substantial shocks in effecting shifting by the clutch whose clutch drum is rotating at high speeds prior to shifting.

A hydraulic control system according to the preamble part of claim 1 is known from US—A—4 071 126. The pressure control valve of this known control system has a valve member movable in a radially outward direction as rotation of the clutch drum increases. This movement of the valve member allows a discharge of fluid from a fluid pressure chamber defined within the clutch drum. Thus, the known control valve forms a centrifugal force responsive valve.

### Summary of the invention

It is an object of the present invention to provide a hydraulic control system which avoids substantial shocks even effecting shifting by a frictional unit whose drum defining a fluid pressure chamber is rotating at the time of shifting.

The solution of this object is achieved by the features of claim 1.

According to the present invention, the hydraulic control system includes a centrifugal force offset valve which offsets an increase in fluid pressure within a fluid pressure chamber of a frictional unit due to a centrifugal force.

Dependent claims 2 to 5 contain advantageous embodiments of the hydraulic control system according to claim 1.

### Brief description of the drawings

Fig. 1 is a schematic view of a power transmission mechanism of a four speed automatic transmission as illustrated in connection with an engine which has a throttle mounted in an intake passage and an accelerator pedal; and

Figs. 2(a), 2(b), 2(c) and 3, when combined, illustrate a circuit diagram of a preferred embodiment of a hydraulic control system for the automatic transmission according to the present invention.

### Detailed description of the invention

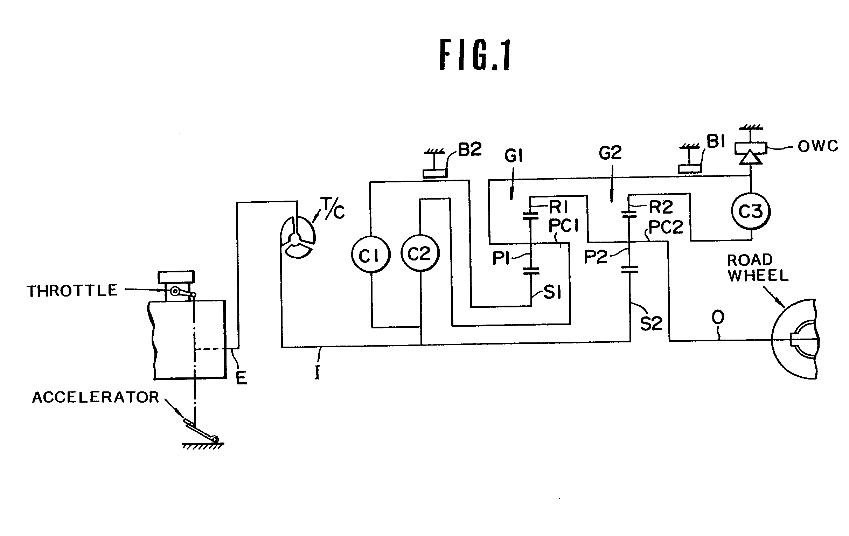

Referring to Fig. 1, there is illustrated a power transmission mechanism of a four forward speed and one reverse speed automatic transmission having an overdrive. This power transmission mechanism comprises an input shaft I operatively connected via a torque converter T/C to an engine output shaft E of an engine which has a throttle which opens in degrees, an output shaft O operatively connected to road wheels, only one being shown, via a final drive, not shown. A first planetary gear set G1 and a second planetary gear set G2 are connected between the input and output shafts I and O. A plurality of fluid operated friction units are provided which are made operative and inoperative for producing a plurality of speed ratios between the input shaft I and output shaft O. The fluid operated frictional units include a first clutch C1, a second clutch C2, a third clutch C3, a first brake B1, a second brake B2, and a one-way clutch OWC. The first planetary gear set G1 comprises a sun gear S1, an internal gear R1, a carrier PC1 carrying pinion gears P1 meshing simultaneously both the gears S1 and R1. The planetary gear set G2 comprises a sun gear S2, an internal gear R2 and a carrier PC2 carrying pinion gears P2 meshing simultaneously both gears S2 and R2. The carrier PC1 is connectable via the clutch C1 with the input shaft I, and the sun gear S1 is connectable via the clutch C2 with the input shaft I. The carrier PC1 is connectable via the clutch C3 with the internal gear R2. The sun gear S2 is constantly connected with the input shaft I. The internal gear R1 and carrier PC2 are constantly connected with the output shaft O. The brake B1 is arranged to anchor the carrier PC1. The brake B2 is arranged to anchor the sun gear S1. The one-way clutch OWC is so constructed that it allows forward rotation (i.e., the same rotation as that of the engine output shaft E), but prevents reverse rotation (i.e., the rotation opposite to the forward rotation). Thus, it acts as a brake only during reverse rotation.

In the above mentioned power transmission mechanism, the rotational state of each of the rotary elements (S1, S2, R1, R2, PC1, and PC2) of the planetary gear sets G1 and G2 can be varied by actuating a selected one or a combination of the clutches C1, C2 and C3, brake B1 (one-way clutch OWC) and brake B2, thus varying the revolution speed of the output shaft O relative to that of the input shaft I. The four forward speed ratios and one reverse speed ratio are produced if the clutches C1, C2 and C3 and brakes B1 and B2 are engaged in the manner as shown in the following Table.

TABLE

| | C1 | C2 | C3 | B1 (DWC) | B2 | Gear ratio | $\alpha^1$=0.45 $\alpha^2$=0.45 |
|---|---|---|---|---|---|---|---|
| 1st speed | | | o | o | | $\dfrac{1+\alpha^2}{\alpha^2}$ | 3.22 |
| 2nd speed | | | o | | o | $\dfrac{\alpha^1+\alpha^2}{\alpha^2(1+\alpha^1)}$ | 1.38 |
| 3rd speed | | o | o | | | 1 | 1 |
| 4th speed | | o | | | o | $\dfrac{1}{1+\alpha^1}$ | 0.69 |
| Reverse | o | | | o | | $-\dfrac{1}{\alpha^1}$ | −2.22 |

In the above Table, a sign "o" denotes an actuation state of the clutch or brake, α1 and α2 respectively denote ratios of the number of teeth of the internal gears R1 and R2 to the number of teeth of the corresponding sun gears S1 and S2. A gear ratio is a ratio of the revolution number of the input shaft I to that of the output shaft O. What is denoted by the label (OWC) below the brake B1 means that the first speed ratio is produced owing to the action of the one-way clutch OWC even if the brake B1 is not applied. However, in this first speed ratio, it is not possible for the output shaft O to drive the engine (that is, no engine braking is effected).

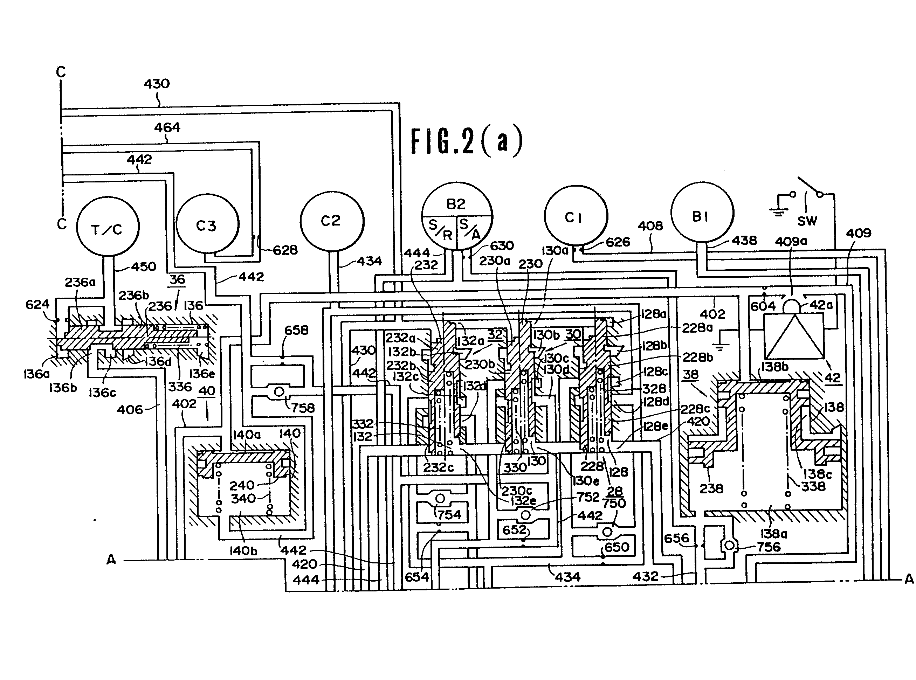

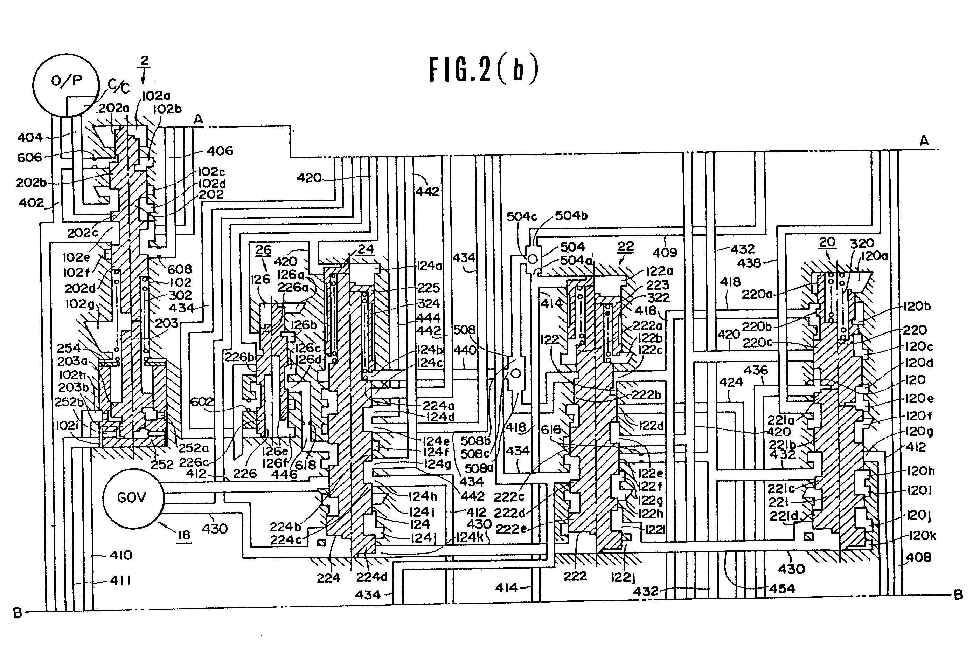

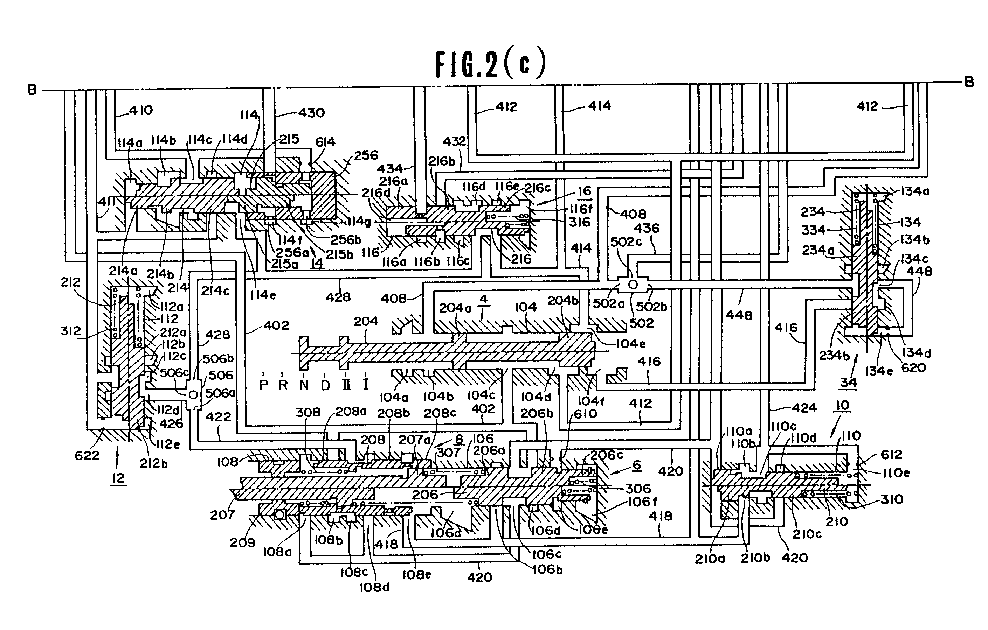

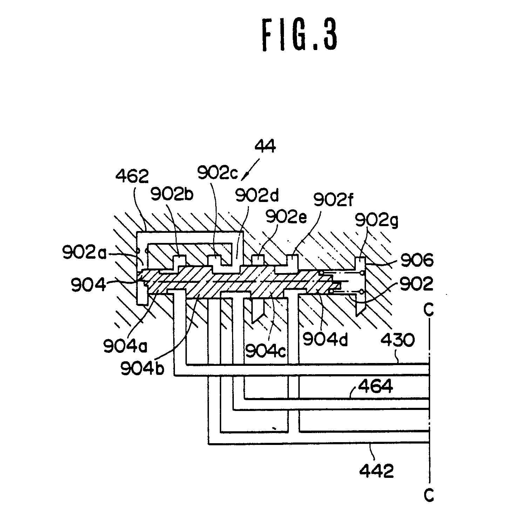

Referring to Figs. 2(a), 2(b), 2(c), and 3, a hydraulic control system for the above power transmission mechanism is described.

This hydraulic control system comprises a regulator valve 2, a manual valve 4, a throttle valve 6, a throttle fail safe valve 8, a throttle modulator valve 10, a pressure modifier valve 12, a cut back valve 14, a line pressure booster valve 16, a governor valve 18, a 1-2 shift valve 20, a 2-3 shift valve 22, a 3-4 shift valve 24, a 2-4 timing valve 26, a 2-3 timing valve 28, a 3-4 timing valve 30, a 3-2 timing valve 32, a first manual range pressure reducing valve 34, a torque converter pressure reducing valve 36, a 1-2 accumulator 38, a 4-3 accumulator 40, an overdrive inhibitor solenoid 42, and a centrifugal force offset valve 44 (see Fig. 3). These valves are interconnected as shown in Figs. 2(a), 2(b), 2(c), and 3, and connected with an oil pump O/P, the torque converter T/C, clutches C1, C2 and brakes B1 and B2 as shown. The brake B2 has a servo apply chamber S/A, i.e., a fluid pressure chamber designed to apply the brake when pressurized, and a servo release chamber S/R, i.e., a fluid pressure chamber designed to release the brake when pressurized. Since the servo release chamber S/R has a larger pressure acting area than a pressure acting area of the servo apply chamber S/A, the brake B2 is released when the pressure is supplied to the servo release chamber S/R irrespective of the supply of fluid pressure to the servo apply chamber S/A. The overdrive inhibitor solenoid 42 is electrically connected with an overdrive inhibitor switch SW.

The names of parts denoted by the reference numerals in Figs. 2(a), 2(b) and 2(c) are hereinafter listed. The reference numerals 102, 104, 106, 108, 110, 112, 114, 116, 120, 122, 124, 126, 128, 130, 132, 1334 and 136 denote valve bores, the reference numerals 102a~j, 104a~f, 106a~f, 108a~e, 110a~e, 112a~e, 114a~g, 116a~f, 120a~k, 122a~j, 124a~k, 126a~e, 130a~e, 132a~e, and 136a~e ports, the reference numerals 138 and 140 cylinder bores, the reference numerals 202, 203, 204, 206, 210, 212, 214, 215, 216, 220, 221, 222, 224, 226, 228, 230, 232, 234, and 236 spools, the reference numerals 202a~d, 203a~b, 204a~b, 206a~c, 208a, 210a~c, 212a~b, 214a~c, 215a~b, 216a~c, 220a~c, 221a~d, 222a~e, 224a~d, 226a~c, 228a~c, 230a~c, 232a~c, 234a~b, and 236a~b lands, the reference numeral 207 plunger, the reference numeral 208 sleeve, the reference numeral 209 plug, the reference numerals 223 and 225 plugs, the reference numeral 238 and 240 pistons, the reference numeral 252 sleeve, the reference numeral 252a~c ports, the reference numeral 254 spring seat, the reference numerals 302, 306, 307, 308, 310, 312, 316, 320, 322, 324, 328, 330, 332, 334, 336, 338, and 340 springs, the reference numerals 402, 404, 406, 408, 409, 410, 411, 412, 414, 416, 418, 420, 422, 424, 426, 428, 430, 432, 434, 436, 438, 440, 442, 444, 446, 448 and 450 oil conduits, the reference numerals 502, 504, 506 and 508 shuttle valves, the reference numerals 602, 604, 606, 608, 610, 612, 614, 616, 618, 620, 622, 624, 626, 628, 630, 650, 652, 654, 656 and 658 orificies, and the reference numerals 750, 752, 754, 756 and 758 check valves.

Referring to Fig. 3, the centrifugal force offset valve 44 embodying the present invention comprises a valve bore 902 having seven ports 902a to 902g, a valve member in the form of a spool 904 having four lands 904a to 904d (the lands 904b and 904c are of the same diameter and the lands 904a and 904d are of smaller diameter than the former two), and a spring 906 biasing the spool 904 to the left as viewed in Fig. 3. The ports 902a and 902d communicate with each other by a fluid conduit 462, and the port 902d communicates with the clutch C3 via a fluid conduit 464. The port 902b communicates with a fluid conduit 430 which defines a part of a governor pressure circuit. The port 902c and port 902f communicate with a fluid conduit 442. This fluid conduit 442 communicates with the 3-4 shift valve 24 and is always supplied with fluid pressure to establish first, second and third speed ratios. The ports 902e and 902g are drain ports, respectively.

The operation is described hereinafter.

As apparent from the preceding Table, the clutch C2 and brake B2 are actuated in the fourth speed ratio. Under this condition, the clutch drum of the clutch C3 rotates at high speeds and is subject to a centrifugal force which is proportional to the square of the rotational speed of the clutch drum. When, under this condition, the 3-4 shift valve 24 (see Fig. 2(b)) shifts from an upshift position thereof, as illustrated by the left half thereof in Fig. 2(b), to a downshift position thereof, as illustrated by the right half thereof in Fig. 2(b), the fluid pressure (line pressure) is supplied to the fluid conduit 442. When the fluid pressure is supplied to the fluid conduit 442, the spool 904 of the centrifugal force offset valve 44 assumes a state indicated by the bottom half thereof in Fig. 3 wherein pressure regulation is effected by using the line pressure in the port 902c as a source of fluid pressure and the port 902e as a drain port. When the spool 904 assumes this state, the fluid pressure Pr in the ports 902a and 902d is regulated to such a value that the sum of a rightwardly directed force, viewing in Fig. 3, due to the fluid pressure (Pr) in the port 902a and a rightwardly directed force, as viewed in Fig. 3, due to the fluid pressure (governor pressure PG) in the port 902b balances with the sum of a leftwardly directed force, as viewed in Fig. 3, due to the fluid pressure (line pressure PL) in the port 902f and a leftwardly directed force, as viewed in Fig. 3, due to the spring 906. The above mentioned fluid pressure Pr is determined by the following equation.

Assuming that the area of the land 904a is S1, a differential area between the lands 904a and 904b is S2, a differential area between the lands 904c and 904d is S3 (S3 is set equal to S1), and a force of the spring 906 is f, then

$$Pr \cdot S1 + PG \cdot S2 = PL \cdot S3 + f$$
$$Pr = (S3/S1) \cdot PL - (S2/S1) \cdot PG + f/S1.$$

Since S3 = S1,
$$Pr = PL - (S2/S1) \cdot PG + f/S1.$$

Since the force f of the spring 906 is set very small, then
$$Pr = PL - (S2/S1) \cdot PG.$$

As will be apparent from the above equation, the fluid pressure Pr decreases as the governor pressure PG increases. The governor pressure is proportional to the square of the rotational speed of the output shaft O and the rotational speed of the output shaft O is proportional to the rotational speed of the clutch drum of the clutch C3. Thus, the fluid pressure Pr decreases as a function of the square of the rotational speed of the clutch drum. Since the fluid pressure created within the clutch drum by the centrifugal force is proportional to the square of the rotational speed of the clutch drum, the above mentioned fluid pressure Pr decreases as the centrifugal force increases. By setting the areas S1 and S2 to appropriate values, it is possible to let a decrease in the fluid pressure Pr due to the rotation of the clutch drum equal to an increase in fluid pressure within the clutch drum due to the centrifugal force. This means that the fluid pressure for actuating the clutch C3 can be kept substantially unaffected by the centrifugal force irrespective of the variation in rotational speed of the clutch drum. Therefore, even at high vehicle speeds, substantial shocks in effecting 4-3 downshifting are avoided. Similarly, substantial shocks in effecting 4-2 downshifting and 4-1 downshifting are avoided.

Since substantially no governor pressure is available when the vehicle moves off from the standstill, line pressure which is not reduced acts on the clutch C3, thus securing sufficiently large capacity of the clutch.

Although in the above described embodiment, the present invention has been applied to the four speed automatic transmission, the present invention may be applied to any automatic transmission as long as it has a clutch which is engageable when its clutch drum is rotating.

From the preceding description, it will be appreciated that substantial shocks in effecting downshifting from the fourth speed ratio to any one of the third, second and first speed ratios are avoided.

## Claims

1. A hydraulic control system for an automatic transmission including a clutch (C3) having a clutch drum defining a fluid pressure chamber, the clutch being engageable in response to fluid pressure supplied to the fluid pressure chamber to shift the automatic transmission by engaging the clutch with the clutch drum rotating, the hydraulic control system comprising:
a fluid source (O/P) providing a pressurized fluid (line 402);
a regulator valve (2) communicating with said fluid source (O/P) to regulate the pressurized fluid and generate a first servo actuating fluid pressure (PL in lines 402, 412);
a shift valve (3-4 shift valve 24) communicating with said regulator valve (2) for supplying said first servo actuating fluid pressure to the fluid pressure chamber of said clutch (C3);
a control valve (44) to regulate fluid pressure within the fluid pressure chamber of said clutch (C3), characterised in that
said control valve is a centrifugal force offset valve (44) and comprises means defining a bore with a plurality of ports including an inlet port (902c) receiving said first servo actuating fluid pressure (PL in line 442), a drain port (902e), a signal pressure port (902d) receiving a governor fluid pressure (PG in line 430), and an outlet port (902d) communicating with the fluid pressure chamber of the clutch (C3),
said centrifugal force offset valve (44) also includes a valve member (spool 904) formed with a plurality of lands (904a, 904b, 904c, 904d) cooperating with said plurality of ports such that fluid communication of said outlet port (902d) with said inlet port (902c) and that with said drain port (902e) are varied in response to movement of said valve member (spool 904),
said valve member (spool 904) has a first pressure acting area (S1, land 904a) exposed to the fluid pressure (Pr) at said outlet port (902d) which acts in the fluid pressure chamber of said clutch (C3), a secdond pressure acting area (S2, between lands 904a and 904b) exposed to the governor pressure (PG in line 430), and a third pressure acting area (S3, between lands 904c and 904d) exposed to said first servo actuating fluid pressure (PL in line 442),
said centrifugal force offset valve (44) further includes spring means (902) for biasing said valve member (spool 904) in a predetermined direction, said first and second pressure acting areas (S1, S2) are oriented such that said valve member (spool 904) is urged against said spring means (902) as said governor fluid pressure (PG) is increased, and said third pressure acting area (S3) is oriented such that said valve member (spool 904) is urged in said predetermined direction assisting said spring means as said first servo actuating fluid pressure (PL) is increased.

2. A hydraulic control system as claimed in claim 1, characterized in that said first servo actuating fluid pressure is a line fluid pressure.

3. A hydraulic control system as claimed in claim 1 or 2, characterized in that said governor fluid pressure (PG) is proportional to the square of the rotational speed of the transmission output shaft.

4. A hydraulic control system according to one of claims 1 to 3 being characterized in comprising:
a variable capacity pump (O/P) for supplying fluid pressure, said pump having a control arrangement including a control chamber (C/C),
a pressure regulator valve (2) for regulating the output of said pump by draining off some of the fluid discharged by said pump and developing a control pressure (line 404), said pressure regulating valve (2) having first and second ports, said first port (102f) fluidly communicating with said torque converter through a first conduit (406), said second port (102d) fluidly communicating with said control chamber (C/C) through a second conduit (404), and
a pressure limiting valve (36) being disposed in said first conduit (406) for limiting the pressure fed to said torque converter through said first conduit (406), said pressure limiting valve (36) having a feedback chamber (136a) which is supplied with the pressure prevailing in said first conduit (406) downstream of said pressure regulator valve (2), the above arrangement being such as to maintain the pressure in said control chamber (C/C) at a level which minimizes the power consumption of said pump (O/P) with respect to the level of control pressure produced by said regulator valve (2).

5. A hydraulic control system as claimed in claim 4, characterized in that said pressure limiting valve (36) comprises:
a spool (236) disposed in a bore (136) to define a variable volume feedback chamber formed with a feedback port (136a) an inlet port (136b) which communicates with said first port (102f), an outlet port (136c) which communicates with said torque converter (T/C), and a drain port (136d), said outlet port (136c) being in fluid communication with said feedback port (136a) via a flow restrictor (624).

## Patentansprüche

1. Hydraulisches Steuersystem für ein automatisches Getriebe, enthaltend eine Kupplung (C3), die ein Kupplungsgehäuse besitzt, welches eine Fluiddruckkammer bildet, wobei die Kupplung in Abhängigkeit von dem Fluiddruck, der an die Fluiddruckkammer gelegt ist, in Eingriff bringbar ist, um das automatische Getriebe durch Ineingriffbringen der Kupplung mit dem sich drehenden Kupplungsgehäuse zu schalten, wobei das hydraulische Steuersystem aufweist:

eine Fluidquelle (O/P) zur Bereitstellung eines unter Druck stehenden Fluides (Leitung 402);

ein Regulierventil (2), das mit der Fluidquelle (O/P) kommunizierend verbunden ist, um das unter Druck stehende Fluid zu regulieren und einen ersten Servo-Betätigungsfluiddruck (PL in den Leitungen 402, 412) zu erzeugen;

ein Schaltventil (3-4-Schaltventil 24), das mit dem Regulierventil (2) kommunizierend verbunden ist, um den ersten Servo-Betätigungsfluiddruck an die Fluiddruckkammer der Kupplung (C3) zu legen;

ein Steuerventil (44), um den Fluiddruck innerhalb der Fluiddruckkammer der Kupplung (C3) zu regulieren,

dadurch gekennzeichnet, daß

das Steuerventil ein Zentrifugalkraft-Verschiebungsventil (44) ist und eine Einrichtung aufweist, die eine Bohrung mit einer Mehrzahl von Anschlüssen bildet, einschließlich eines Einlaßanschlusses (902c), der den ersten Servo-Betätigungsfluiddruck (PL in Leitung 442) aufnimmt,

einen Entlastungsanschluß (902e), einen Signaldruckanschluß (902d), der einen Regler-Fluiddruck (PG in Leitung 430) aufnimmt, einen Auslaßanschluß (902d), der mit der Fluiddruckkammer der Kupplung (C3) kommunizierend verbunden ist,

wobei das Zentrifugalkraft-Verschiebungsventil (44) ebenfalls enthält ein Ventilteil (Schieber 904), versehen mit einer Mehrzahl von Stegen (904a, 904b, 904c, 904d), die mit der Mehrzahl der Anschlüsse zusammenwirken, derart, daß eine Fluidverbindung zwischen dem Auslaßanschluß (902d) und dem Einlaßanschluß (902c) sowie mit dem Entlastungsanschluß (902e) in Abhängigkeit von der Bewegung des Ventilteils (Schieber 904) verändert werden,

wobei das Ventilteil (Schieber 904) eine erste Druckwirkungsfläche (S1, Steg 904a) aufweist, die dem Fluiddruck (Pr) an dem Auslaßanschluß (902d) ausgesetzt ist, der in der Fluiddruckkammer der Kupplung (C3) wirksam ist, eine zweite Druckwirkungsfläche (S2 zwischen den Stegen 904a, 904b) aufweist, die dem Reglerdruck (PG in Leitung 430) ausgesetzt ist, sowie eine dritte Druckwirkungsfläche (S3 zwischen den Stegen 904c und 904d) besitzt, die dem ersten Servo-Betätigungsfluiddruck (Pl in Leitung 442) ausgesetzt ist,

wobei das Zentrifugalkraft-Verschiebungsventil (44) außerdem aufweist eine Federeinrichtung (902) zum Vorspannen des Ventilteiles (Schieber 904) in eine bestimmte Richtung, die erste und zweite Druckwirkungsfläche (S1, S2) so orientiert sind, daß das Ventilteil (Schieber 904) gegen die Federeinrichtung (902) gedrückt wird, wenn der Reglerfluiddruck (PG) erhöht wird und die dritte Druckwirkungsfläche (S3) so orientiert ist, daß das Ventilteil (Schieber 904) in die vorbestimmte Richtung, die Federeinrichtung unterstützend, gedrückt wird, wenn der erste Servo-Betätigungsfluiddruck (PL) erhöht wird.

2. Hydraulisches Steuersystem nach Anspruch 1, dadurch gekennzeichnet, daß der erste Servo-Betätigungsfluiddruck ein Leitungsfluiddruck ist.

3. Hydraulisches Steuersystem nach Anspruch 1 oder 2, dadurch gekennzeichnet, daß der Reglerfluiddruck (PG) proportional dem Quadrat der Drehzahl der Getriebe-Abtriebswelle ist.

4. Hydraulisches Steuersystem nach einem der Ansprüche 1 bis 3, gekennzeichnet durch:

eine in ihrer Kapazität veränderliche Pumpe (O/P) zum Zuführen eines Fluiddruckes, wobei die Pumpe eine Steueranordnung einschließlich einer Steuerkammer (C/C) aufweist,

ein Druckregulierventil (2) zum Regulieren des Ausstoßes der Pumpe durch Ablassen von Teilen des Fluides, das durch die Pumpe bereitgestellt wird und Aufbauen eines Steuerdruckes (Leitung 404), wobei das Druckregulierventil (2) einen ersten und einen zweiten Anschluß aufweist, der erste Anschluß (102f) durch eine erste Leitung (406) mit dem Drehmomentwandler in Fluidverbindung steht, der zweite Anschluß (102d) durch eine zweite Leitung (404) mit der Steuerkammer (C/C) in Fluidverbindung steht, und

ein Druckbegrenzungsventil (36), das in der ersten Leitung (406) angeordnet ist, um den Druck, der an den Drehmomentwandler über die erste Leitung (406) gelegt ist, zu begrenzen, wobei das Druckbegrenzungsventil (36) eine Rückmeldekammer (136a) aufweist, an die der Druck gelegt ist, der in der ersten Leitung (406) stromab des Druckregulierventils (2) herrscht und die obige Anordnung so ausgelegt ist, daß der Druck in der Steuerkammer (C/C) auf einem Niveau gehalten wird, welches den Energieverbrauch der Pumpe (O/P) in Bezug auf das Niveau des Steuerdruckes, der durch das Regulierventil (2) erzeugt wird, minimiert.

5. Hydraulisches Steuersystem nach Anspruch 4, dadurch gekennzeichnet, daß das Druckbegrenzungsventil (36) aufweist:

einen Schieber (236), angeordnet in einer Bohrung (136), um eine volumenveränderliche Rückmeldekammer zu begrenzen, die mit einem Rückmeldeanschluß (136a), einem Einlaßanschluß (136b), der mit dem ersten Anschluß (102f) kommuniziert, einem Auslaßanschluß (136c), der mit dem Drehmomentwandler (T/C) kommuniziert und einem Entlastungsanschluß (136d) kommunizierend verbunden ist, wobei der Auslaßanschluß (136c) in Fluidverbindung mit dem Rückmeldeanschluß (136a) über eine Strömungsbegrenzungseinrichtung (624) ist.

# EP 0 103 751 B1

**Revendications**

1. Système de commande hydraulique pour une transmission automatique comprenant un embrayage (C3) ayant un tambour d'embrayage définissant une chambre à pression de fluide, l'embrayage pouvant être engagé en réponse à une pression de fluide fournie à la chambre à pression de fluide pour enclencher la transmission automatique en engageant l'embrayage, le tambour d'embrayage tournant, le système de commande hydraulique comprenant:

une source de fluide (O/P) fournissant un fluide sous pression (ligne 402);

une vanne régulatrice (2) communiquant avec ladite source de fluide (O/P) pour réguler le fluide sous pression et produire une première pression de fluide d'entraînement par servomécanisme (PL dans les lignes 402, 412);

une vanne d'enclenchement (3-4 vanne d'enclenchement 24) communiquant avec ladite vanne régulatrice (2) pour fournir ladite première pression de fluide d'entraînement par servomécanisme à la chambre à pression de fluide dudit ambrayage (C3);

une vanne de commande (44) pour réguler la pression de fluide à l'intérieur de la chambre à pression de fluide dudit embrayage (C3),

caractérisé en ce que

ladite vanne de commande est une vanne de déviation (44) à force centrifuge et comprend des moyens définissant un alésage avec une pluralité d'orifices comprenant un orifice d'entrée (902c) recevant ladite première pression de fluide d'entraînement par servomécanisme (PL dans la ligne 442) un orifice de décharge (902e), un orifice de pression de signal (902d) recevant une pression de fluide de régulateur (PG dans la ligne 430), et un orifice de sortie (902d) communiquant avec la chambre à pression de fluide de l'embrayage (C3),

ladite vanne de déviation à force centrifuge (44) inclut également un élément de vanne (corps 904) formé avec une pluralité d'intervalles (904a, 904b, 904c, 904d) coopérant avec ladite pluralité d'orifices de façon que la communication par fluide dudit orifice de sortie (902d) avec ledit orifice d'entrée (902c) et celle avec ledit orifice de décharge (902e) sont modifiées en réponse au mouvement dudit élément de vanne (corps 904),

ledit élément de vanne (corps 904) a une première zone d'actionnement de pression (S1, intervalle 904a) exposée à la pression de fluide (Pr) au niveau dudit orifice de sortie (902d) qui agit dans la chambre à pression de fluide dudit embrayage (C3), une seconde zone d'actionnement de pression (S2, entre les intervalles 904a et 904b), exposée à la pression de régulateur (PG dans la ligne 430), et une troisième zone d'actionnement de pression (S3, entre les intervalles 904c et 904d) exposée à ladite première pression de fluide d'entraînement par servomécanisme (PL dans la ligne 442),

ladite vanne de déviation à force centrifuge (44) comprend en outre un moyen formant ressort (902) pour déplacer ledit élément de vanne (corps 904) dans une direction prédéterminée, lesdites première et seconde zones d'actionnement de pression (S1, S2) sont orientées de façon que ledit élément de vanne (corps 904) soit poussé contre ledit moyen formant ressort (902) lorsque ladite pression de fluide de régulateur (PG) est augmentée, et ladite troisième zone d'actionnement de pression (S3) est orientée de façon que ledit élément de vanne (corps 904) soit poussé dans ladite direction prédéterminée assistant ledit moyen formant ressort lorsque ladite première pression de fluide d'entraînement par servomécanisme (PL) est augmentée.

2. Système de commande hydraulique selon la revendication 1, caractérisé en ce que ladite première pression de fluide d'entraînement par servomécanisme est une pression de fluide de ligne.

3. Système de commande hydraulique selon la revendication 1 ou 2, caractérisé en ce que ladite pression de fluide régulateur (PG) est proportionnelle au carré de la vitesse de rotation de l'arbre de sortie de la transmission.

4. Système de commande hydraulique selon l'une des revendications 1 à 3, caractérisé en ce qu'il comprend:

une pompe à capacité variable (O/P) pour fournir une pression de fluide, ladite pompe ayant un dispositif de commande comprenant une chambre de commande (C/C), une vanne régulatrice de pression (2) pour réguler la sortie de ladite pompe en évacuant une certaine quantité du fluide refoulé par ladite pompe et en développant une pression de commande (ligne 404), ladite vanne régulatrice de pression (2) ayant des premier et second orifices, ledit premier orifice (102f) communiquant par fluide avec lesdits convertisseurs de couple par l'intermédiaire d'une première conduite (406), ledit second orifice (102d) communiquant par fluide avec ladite chambre de commande (C/C) par l'intermédiaire d'une seconde conduite (404), et

une vanne de limitation de pression (36) étant disposée dans ladite première conduite (406) pour limiter la pression envoyée audit convertisseur de couple par l'intermédiaire de ladite première conduite (406), ladite vanne de limitation de pression (36) ayant une chambre de contre-réaction (136a) qui est alimentée avec la pression régnant dans ladite première conduite (406) en aval de ladite vanne régulatrice de pression (2), le dispositif ci-dessus étant tel qu'il maintient la pression dans ladite chambre de commande (C/C) à un niveau qui minimise la consommation d'énergie de ladite pompe (O/P) par rapport au niveau de pression de commande produite par ladite vanne régulatrice (2).

7

5. Système de commande hydraulique selon la revendication 4, caractérisé en ce que ladite vanne de limitation de pression (36) comprend:

un corps (236) disposé dans un alésage (136) pour définir une chambre de contre-réaction à volume variable formée avec un orifice de contre-réaction (136a), un orifice d'entrée (136b) qui communique avec ledit premier orifice (102f), un orifice de sortie (136c) qui communique avec ledit convertisseur du couple (T/C), et un orifice de décharge (136d), ledit orifice de sortie (136c) étant en communication par fluide avec ledit orifice de contre-réaction (136a) par l'intermédiaire d'un dispositif d'étranglement de l'écoulement (624).

# FIG.1

EP 0 103 751 B1

FIG.2(a)

**FIG.2 (b)**

# FIG.2(c)

EP 0 103 751 B1

# FIG.3